# EUROPÄISCHE PATENTSCHRIFT

(11) **EP 1 074 419 B1**
(45) Veröffentlichungstag und Bekanntmachung des Hinweises auf die Patenterteilung: **10.11.2004**
(21) Anmeldenummer: 00112003.9
(22) Anmeldetag: 02.06.2000
(51) Int. Cl.: B60K 11/08

(54) **Kühlerjalousie**
Radiator shutter
Calandre de radiateur

(30) Priorität: 06.08.1999 DE 19937153
(43) Veröffentlichungstag der Anmeldung: 07.02.2001
(73) Patentinhaber: DaimlerChrysler AG, 70567 Stuttgart (DE)
(72) Erfinder: Liegert, Harald, 70499 Stuttgart (DE); Raabe, Burkhard, 71083 Herrenberg (DE)

(56) Entgegenhaltungen:
- DE-A- 2 908 734
- DE-C- 397 239
- DE-C- 613 939
- DE-C- 3 929 023

## Beschreibung

Die Erfindung betrifft eine Jalousie für einen Kühler einer Brennkraftmaschine, insbesondere eines Personenkraftwagens, mit den Merkmalen des Oberbegriffes des Anspruches 1. Eine derartige Jalousie ist aus der DE 397239 C bekannt. Eine andere Jalousie ist aus der DE 2908734 A bekannt, wobei jede Lamelle ein aerodynamisches Profil aufweist, das schalenförming ausgebildet ist und bei geschlossenen Lamellen anstromseitig eine konvex gewölbte Seite aufweist.

Nach andere Jalousien sind beispielsweise aus der DE 34 35 700 C2 sowie aus der DE 43 04 336 A1 bekannt. Diese Kühlerjalousien weisen mehrere nebeneinander angeordnete Lamellen auf, deren Längsachsen parallel zu einer Jalousieebene verlaufen, wobei sie auch in der Jalousieebene liegen können. Außerdem sind Antriebsmittel vorgesehen, mit denen die Lamellen jeweils um eine parallel zur zugehörigen Längsachse verlaufende Schwenkachse schwenkverstellbar sind.

Des weiteren ist aus der DE 196 32 684 A1 eine Lamellen-Jalousie für Fenster in Gebäuden bekannt, die ebenfalls mehrere nebeneinander angeordnete Lamellen aufweist, deren Längsachsen waagerecht und parallel zu einer Jalousieebene verlaufen. Mit Hilfe von Antriebsmitteln können die Lamellen jeweils um eine parallel zur zugehörigen Längsachse verlaufende Schwenkachse schwenkverstellt werden. Bei dieser Lamellenjalousie sind die Antriebsmittel so ausgestaltet, daß die Lamellen einzeln oder Gruppenweise unabhängig voneinander gesteuert in unterschiedliche Winkelstellungen verschwenkbar sind, um auf diese Weise eine auch die Tiefe eines Raumes erfassende gute Raumaufhellung durch eine entsprechende Lenkung der einfallenden Lichtstrahlen an die Raumdecke zu erzielen, ohne daß sich dadurch eine Blendwirkung für sich im Raum aufhaltende Personen ergibt. Um die separate Verstellung einzelner Lamellen oder Lamellengruppen zu erreichen, weist die bekannte Fensterjalousie für jede Lamelle oder für jede Lamellengruppe einen separaten Getriebemotor auf.

Die vorliegende Erfindung beschäftigt sich mit dem Problem, für eine Jalousie der eingangs genannten Art eine Ausführungsform anzugeben, die eine effizientere Kühlluftbeaufschlagung des Kühlers ermöglicht.

Dieses Problem wird erfindungsgemäß durch eine Jalousie mit den Merkmalen des Anspruches 1 gelöst. Durch die Ausbildung von zwei Jalousiebereichen, deren Lamellen gleichzeitig, jedoch bezüglich der Lamellen des jeweils anderen Jalousiebereiches gegensinnig verstellbar sind, kann die durch die Jalousie hindurchtretende Kühlluftströmung besser auf den Kühler ausgerichtet werden. Dies gilt vor allem dann, wenn sich die Jalousie in einer Zwischenstellung befindet, in der sie nicht vollständig geöffnet ist. Durch die erfindungsgemäße Ausgestaltung der Jalousie kann die Kühlluftzufuhr zum Kühler feinstufiger an den Betriebszustand des Verbrennungsmotors bzw. des damit ausgestatteten Kraftfahrzeuges angepaßt werden, wodurch sich beim Kraftfahrzeug insbesondere die Aerodynamik verbessert.

Vorzugsweise wird die erfindungsgemäße Jalousie so ausgebildet, daß die Antriebsmittel zur Verstellung der Lamellen ein Antriebsaggregat aufweisen, das die Lamellen beider Jalousiebereiche zur Schwenkverstellung antreibt. Diese Maßnahme reduziert den Herstellungsaufwand, die Herstellungskosten und den erforderlichen Einbauraum für die Jalousie.

Entsprechend einer vorteilhaften Ausführungsform sind die Lamellen der Jalousiebereiche so verstellbar, daß sich im Fahrbetrieb zumindest in einer Zwischenstellung der Jalousie eine vorteilhafte Konzentration der Kühlluftbeaufschlagung des Kühlers ausbildet. Zu diesem Zweck werden die Lamellen beider Jalousiebereiche von den Antriebsmitteln so angetrieben, daß bei einer die Jalousie öffnenden Lamellenverstellung sich bei jeder Lamelle eine der Längsebene zugewandte Längskante auf der Abströmseite der Jalousie von der Längsebene entfernt und/oder eine von der Längsebene abgewandte Längskante auf der Anströmseite der Jalousie der Längsebene nähert.

Bei einer besonders vorteilhaften Ausführungsform können die Lamellen jeweils ein aerodynamisches Profil aufweisen, das bei einer Umströmung mit Kühlluft eine Auftriebskraft in die jeweilige Lamelle einleitet, die an dieser Lamelle ein Öffnungsmoment erzeugt. Durch die Profilierung wird somit die Öffnungsverstellung der Jalousie unterstützt.

Weitere wichtige Merkmale und Vorteile der erfindungsgemäßen Jalousie ergeben sich aus den Unteransprüchen, aus den Zeichnungen und aus der zugehörigen Figurenbeschreibung anhand der Zeichnungen.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert.

Es zeigen, jeweils schematisch,
- Fig. 1: eine Schnittansicht durch einen zwei Kühllufteinlaßöffnungen aufweisenden Frontbereich eines im übrigen nicht dargestellten Personenkraftwagens, in dem zwei Jalousien nach der Erfindung angeordnet sind,
- Fig. 2: eine Schnittansicht auf eine erfindungsgemäß ausgestaltete Jalousie entsprechend der Schnittlinie II in Fig. 1,
- Fig. 3: eine Draufsicht auf die erfindungsgemäße Jalousie entsprechend einem Pfeil III in Fig. 2, in der eine erste Variante für Antriebsmittel zur Verstellung der Lamellen prinzipiell dargestellt sind,
- Fig. 4: eine Ansicht wie in Fig. 3, jedoch einer zweiten Variante der Antriebsmittel,
- Fig. 5: eine Ansicht wie in Fig. 3, jedoch einer dritten Variante der Antriebsmittel,
- Fig. 6: eine Ansicht wie in Fig. 3, jedoch einer vierten Variante der Antriebsmittel,
- Fig. 7: eine Ansicht wie in Fig. 3, jedoch einer fünften Variante der Antriebsmittel,
- Fig. 8: eine Schnittansicht wie in Fig. 2, jedoch nur auf einen Teilbereich der Jalousie zur Darstellung einer an den Lamellen ausgebildeten Dichtung,
- Fig. 9: eine Ansicht wie in Fig. 8, jedoch einer anderen Ausführungsform der Dichtung, und
- Fig. 10: eine perspektivische Ansicht auf einen Teilbereich der erfindungsgemäßen Jalousie entsprechend einer bevorzugten Ausführungsform mit profilierten Lamellen.

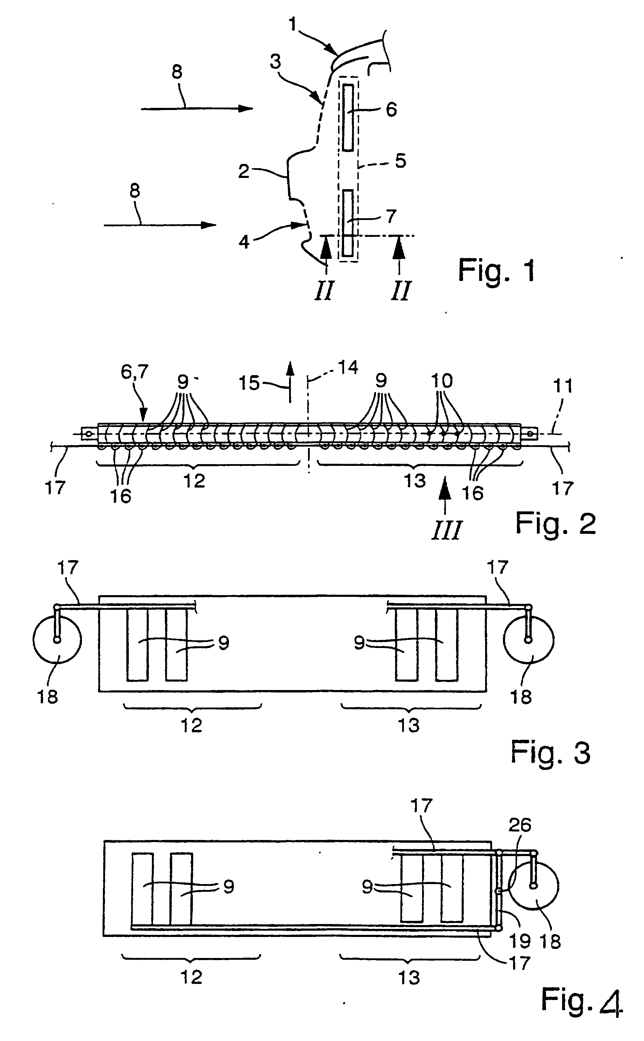

Entsprechend Fig. 1 ist in einer Frontwand 1 eines im übrigen nicht dargestellten Personenkraftwagens oberhalb eines Stoßfängers 2 eine obere Kühllufteinlaßöffnung 3 und unterhalb des Stoßfängers 2 eine untere Kühllufteinlaßöffnung 4 angeordnet. Stromab der Kühllufteinlaßöffnungen 3 und 4 ist in den Strömungsweg eine Jalousieanordnung 5 eingebracht, die eine der oberen Kühllufteinlaßöffnung 3 zugeordnete obere Jalousie 6 sowie eine der unteren Kühllufteinlaßöffnung 4 zugeordnete untere Jalousie 7 enthält. Die Jalousieanordnung 5 bildet dabei eine komplett vormontierte Baugruppe, die im Rahmen einer Endmontage relativ einfach und rasch im Fahrzeug montierbar ist. Die Jalousieanordnung 5 ist stromauf eines nicht dargestellten Kühlers einer Brennkraftmaschine des Fahrzeuges angeordnet. Ebenso kann jede Jalousie 6 und 7 einem separaten Kühler zugeordnet sein, z.B. einem Motorkühler und einem Ladeluftkühler. Die sich durch eine Vorwärtsfahrt des Kraftfahrzeuges ergebende Kühlluftanströmung ist in Fig. 1 durch Pfeile 8 symbolisiert.

Entsprechend Fig. 2 weist die erfindungsgemäße Jalousie 6, 7 eine Vielzahl von Lamellen 9 auf, die so nebeneinander in der Jalousie 6, 7 angeordnet sind, daß ihre Längsachsen 10, die in Fig. 2 senkrecht zur Zeichnungsebene verlaufen, parallel zueinander und parallel zu einer Jalousieebene 11 verlaufen, die in Fig. 2 senkrecht auf der Zeichnungsebene steht, bzw. in dieser Jalousieebene 11 liegen.

Die Jalousie 6, 7 ist in zwei, jeweils durch eine geschweifte Klammer gekennzeichnete Jalousiebereiche 12 und 13 unterteilt, die jeweils mehrere der Lamellen 9 aufweisen und beiderseits einer Längsebene 14 in der Jalousie 6, 7 ausgebildet sind. Diese Längsebene 14 verläuft dabei senkrecht zur Jalousieebene 11 und parallel zu den Längsachsen 10 der Lamellen 9; dementsprechend steht diese Längsebene 14 in Fig. 2 senkrecht auf der Zeichnungsebene.

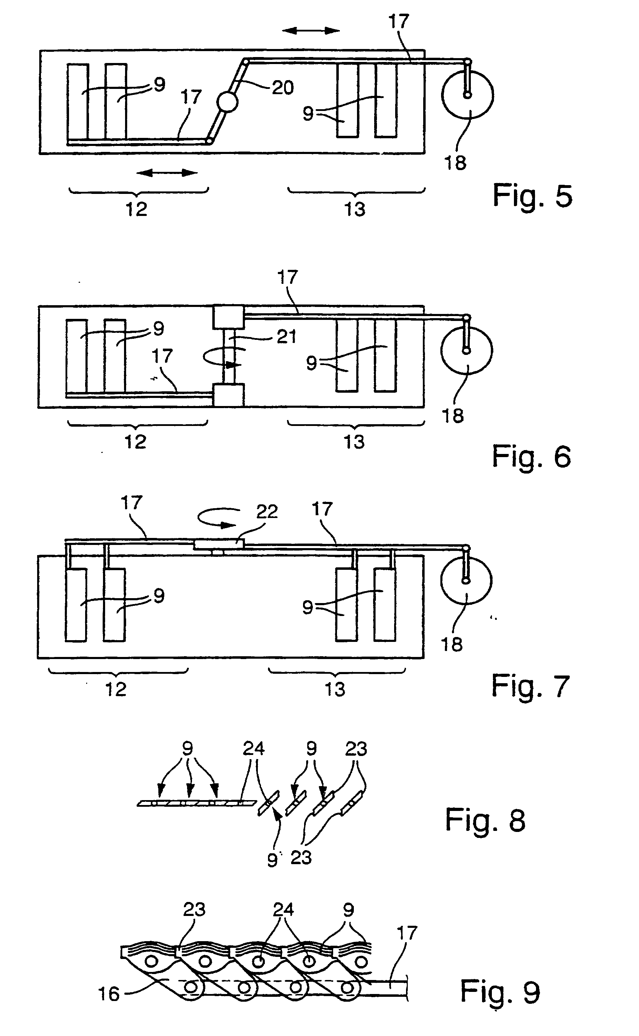

Die Lamellen 9 des einen Jalousiebereiches 12 werden gleichzeitig, jedoch gegensinnig zu den Lamellen 9 des anderen Jalousiebereiches 13 verstellt. Im vorliegenden Fall ist die Jalousie 6, 7 vollständig geöffnet. Die Durchströmungsrichtung der Kühlluftströmung ist in Fig. 2 durch einen Pfeil 15 symbolisiert. Zum Schließen müssen die Lamellen 9 des gemäß Fig. 2 linken Jalousiebereiches 12 im Uhrzeigersinn um ihre parallel zur Längsachse 10 ausgebildete Schwenkachse (vgl. Position 24 in den Fig. 8, 9, 10) schwenkverstellt werden. Dementsprechend müssen die dem gemäß Fig. 2 rechten Jalousiebereich 13 zugeordneten Lamellen 9 um ihre Schwenkachse entgegen dem Uhrzeigersinn verschwenkt werden.

Durch die gegenläufige Anordnung der Lamellen 9 ergibt sich am stromab der Jalousie 6, 7 angeordneten Kühler eine relativ gleichmäßige Kühlluftbeaufschlagung. Bei der in Fig. 2 dargestellten Ausführungsform ergibt sich zumindest in einer Zwischenstellung der Lamellen 9, d.h. bei nicht vollständig geöffneter Jalousie 6, 7, eine Konzentration der Kühlluftströmung 15.

In Fig. 2 bildet die Längsebene 14 gleichzeitig eine Symmetrieebene für die Lamellen 9, die bezüglich dieser Symmetrieebene 14 spiegelbildlich ausgebildet und angeordnet sind.

An jeder Lamelle 9 ist ein Betätigungshebel 16 angebracht, durch die die zugehörige Lamelle 9 zur Durchführung von Schwenkverstellungen antreibbar ist. Die Betätigungshebel 16 des einen Jalousiebereiches 12 können dabei in einer anderen Ebene angeordnet sein, als die Betätigungshebel 16 der Lamellen 9 des anderen Jalousiebereiches 13. Bei jedem Jalousiebereich 12 und 13 sind die zugehörigen Betätigungshebel 16 über eine Antriebsstange 17 miteinander verbunden, so daß sämtliche Lamellen 9 eines Jalousiebereiches 12, 13 bei Betätigung dieser Antriebsstange 17 gleichzeitig und gleichsinnig verstellt werden.

In den Fig. 3 bis 7 sind verschiedene Varianten für die Ausgestaltung eines Antriebs für die Lamellenverstellung wiedergegeben, durch den die den beiden Jalousiebereichen 12 und 13 zugeordneten Lamellen 9 gleichzeitig, gleichmäßig, gleichartig und innerhalb des jeweiligen Jalousiebereiches 12, 13 gleichsinnig, jedoch bezüglich des jeweils anderen Jalousiebereiches 12 bzw. 13 gegensinnig schwenkverstellbar sind.

Entsprechend Fig. 3 ist jedem Jalousiebereich 12 und 13 ein separates Antriebsaggregat 18 zugeordnet, das an der jeweiligen Antriebsstange 17 angreift. Die simultane und gegensinnige Schwenkverstellung der Lamellen 9 wird dabei durch ein nicht dargestelltes gemeinsames Steuergerät erzielt.

Entsprechend Fig. 4 ist bei einer anderen Ausführungsform beiden Jalousiebereichen 12 und 13 ein einziges, gemeinsames Antriebsaggregat 18 zugeordnet, das an einer der Antriebsstangen 17 angreift. Die beiden Antriebsstangen 17 sind dabei über einen bei 26 schwenkgelagerten Wipphebel 19 miteinander gekoppelt, derart, daß sich die gewünschte gleichzeitige und gegensinnige Schwenkverstellung der Lamellen 9 bei den beiden Jalousiebereichen 12 und 13 einstellt.

Bei der Variante gemäß Fig. 5 wird wiederum über ein gemeinsames Antriebsaggregat 18 eine der Antriebsstangen 17 betätigt. Über einen schwenkbar gelagerten Umlenkhebel 20 erfolgt dann die Betätigung der anderen Antriebsstange 17, wobei sich der gewünschte gleichzeitige und gegensinnige Antrieb für die Lamellen 9 ergibt.

Entsprechend Fig. 6 erfolgt die Kopplung der beiden Antriebsstangen 17 über eine Drehstange 21, um die beabsichtigte gleichzeitige und gegensinnige Schwenkverstellung der Lamelle 9 zu ermöglichen. In entsprechender Weise koppelt gemäß Fig. 7 eine Drehscheibe 22 die beiden Antriebsstangen 17.

Andere Antriebsmittel können mit Hilfe von Nocken und/oder mit Hilfe von Kulissen arbeiten, um die Lamellen 9 zu verschwenken.

In den Fig. 3 bis 7 sind die Lamellen 9, die Jalousiebereiche 12, 13 stark vereinfacht wiedergegeben, da lediglich die unterschiedlichen Antriebsprinzipien zu Erzielung einer gleichzeitigen und gegensinnigen Schwenkverstellung für die Lamellen 9 der beiden Jalousiebereiche 12, 13 veranschaulicht werden sollen.

Entsprechend Fig. 8 sind bei einer speziellen Ausführungsform der erfindungsgemäßen Jalousie 6, 7 die Lamellen 9 an ihren Längskanten 23 als Dichtelemente ausgebildet, wobei jeweils die bei benachbarten Lamellen 9 einander zugewandten Längskanten 23 komplementäre Dichtelemente bilden, die in einer in Fig. 8 links dargestellten Schließstellung der Jalousie 6, 7 dichtend miteinander zusammenwirken. Bei der Ausführungsform gemäß Fig. 8 greifen die miteinander zusammenwirkenden Dichtkanten 23 dabei nach Art einer Nut-Feder-Verbindung oder Verzahnung ineinander. In Fig. 8 verläuft eine Schwenkachse 24 der Lamellen 9 senkrecht zur Zeichnungsebene.

Bei einer Variante gemäß Fig. 9 werden die Längskanten 23 der Lamellen 9 so ausgestaltet, daß sich in der Schließstellung der Jalousie 6, 7 benachbarte Lamellen 9 im Bereich ihrer Längskanten 23 gegenseitig, schuppenartig überlappen. Die Schwenkachse 24 der Lamellen 9 verläuft auch in Fig. 9 senkrecht zur Zeichnungsebene. Jede der Lamellen 9 ist gemäß Fig. 9 mit einem der Betätigungshebel 16 ausgestattet, die alle gleichzeitig durch die daran angelenkte Antriebsstange 17 betätigbar sind.

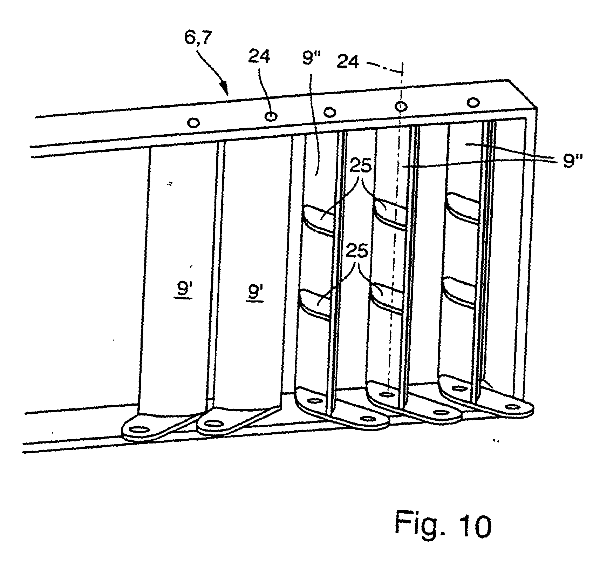

In Fig. 10 ist ein Teilbereich eines der Jalousiebereiche 12, 13 wiedergegeben, wobei hier zur Veranschaulichung zwei der dargestellten Lamellen 9' ihre Schließstellung und drei der dargestellten Lamellen 9'' ihre Öffnungsstellung einnehmen. Bei dieser bevorzugten Ausführungsform weisen die Lamellen 9 (9', 9'') jeweils ein aerodynamisches Profil auf, das so ausgebildet ist, daß sich bei einer Kühlluftdurchströmung der Jalousie 6, 7 eine an der Lamelle 9 angreifende Auftriebskraft ausbildet. Das Profil ist dabei so mit der Schwenkachse 24 der Lamelle 9 abgestimmt, daß durch die Auftriebskraft ein Moment in die Lamellen 9 eingeleitet wird. Dieses Moment ist vorzugsweise so orientiert, daß es eine Öffnungsverstellung der Lamellen 9 unterstützt.

Wie aus Fig. 10 zu entnehmen ist, sind die Profile schalenförmig ausgebildet und weisen bei geschlossenen Lamellen 9' abströmseitig und bei geöffneten Lamellen 9'' bezüglich der Jalousie 6, 7 nach außen eine konvex gewölbte Außenseite auf, während sie bei geschlossenen Lamellen 9' anströmseitig und bei geöffneten Lamellen 9'' bezüglich der Jalousie 6, 7 nach innen eine konkav gewölbte Innenseite aufweisen. In dieser konkaven Innenseite der profilierten Lamellen 9 sind Verstärkungsstege 25 angebracht.

Die Jalousie 6, 7 ist vorzugsweise so ausgebildet, daß die Lamellen 9, wenn die Jalousie 6, 7 im Fahrzeug montiert ist, im wesentlichen vertikal angeordnet sind. Durch diese Maßnahme können das oder die Antriebsaggregate 18 seitlich der Jalousie 6,7 im Motorraum untergebracht werden. In diesem Bereich des Motorraumes steht üblicherweise mehr Stauraum zur Verfügung als oberhalb oder unterhalb der Jalousie 6,7.

## Patentansprüche

1. Jalousie für einen Kühler einer Brennkraftmaschine, insbesondere eines Personenkraftwagens, mit mehreren, nebeneinander angeordneten Lamellen (9), deren Längsachsen (10) parallel zu einer Jalousieebene (11) verlaufen, und mit Antriebsmitteln (16, 17, 18), mit denen die Lamellen (9) jeweils um eine parallel zur zugehörigen Längsachse (10) verlaufenden Schwenkachse (24) schwenkverstellbar sind, wobei die Jalousie (6, 7) in zwei Jalousiebereiche (12, 13) aufgeteilt ist, die jeweils mehrere Lamellen (9) aufweisen und die beiderseits einer Längsebene (14) ausgebildet sind, welche parallel zu den Längsachsen (10) der Lamellen (9) und senkrecht zur Jalousieebene (11) verläuft, und daß die Antriebsmittel (16, 17, 18) so ausgebildet sind, daß bei jedem Jalousiebereich (12, 13) alle Lamellen (9) des jeweiligen Jalousiebereiches (12, 13) gleichzeitig und gleichsinnig verstellbar sind, daß die Lamellen (9) beider Jalousiebereiche (12, 13) gleichzeitig verstellbar sind und daß die Lamellen (9) des einen Jalousiebereiches (12 oder 13) gegensinnig zu den Lamellen (9) des anderen Jalousiebereiches (13 oder 12) verstellbar sind,
**dadurch gekennzeichnet,**
- **daß** jede Lamelle (9) ein aerodynamisches Profil aufweist, das bei einer Umstromung der Lamelle (9) eine Auftriebskraft in diese Lamelle (9) einleitet, die an dieser Lamelle (9) ein Öffnungsmoment erzeugt, und
- **daß** die Profile schalenförmig ausgebildet sind und bei geschlossenen Lamellen (9) anströmseitig eine konkav gewölbte Innenseite aufweisen.

2. Jalousie nach Anspruch 1,
**dadurch gekennzeichnet,**
**daß** in der konkaven Innenseite der profilierten Lamellen (9) Verstärkungsstege (25) angebracht sind.

3. Jalousie nach Anspruch 1 oder 2,
**dadurch gekennzeichnet,**
**daß** die Antriebsmittel ein Antriebsaggregat (18) aufweisen, das die Lamellen (9) beider Jalousiebereiche (12, 13) zur Schwenkverstellung antreibt.

4. Jalousie nach einem der Ansprüche 1 bis 3,
**dadurch gekennzeichnet,**
**daß** die Lamellen (9) beider Jalousiebereiche (12, 13) von den Antriebsmitteln (16, 17) so angetrieben sind, daß bei einer die Jalousie (6, 7) öffnenden Lamellenverstellung sich bei jeder Lamelle (9) eine der Längsebene (14) zugewandte Längskante (23) auf der Abströmseite der Jalousie (6, 7) von der Längsebene (14) entfernt und/oder eine von der Längsebene (14) abgewandte Längskante (23) auf der Abströmseite der Jalousie (6, 7) der Längsebene (14) nähert.

5. Jalousie nach einem der Ansprüche 1 bis 4,
**dadurch gekennzeichnet,**
**daß** die Antriebsmittel ein Gestänge (16, 17) aufweisen, mit dem alle Lamellen (9) eines Jalousiebereiches (12, 13) miteinander zwangsgekoppelt sind und mit dem wenigstens eine Lamelle (9) dieses Jalousiebereiches (12, 13) mit einem Antriebsaggregat (18) der Antriebsmittel zwangsgekoppelt ist.

6. Jalousie nach einem der Ansprüche 1 bis 5,
**dadurch gekennzeichnet,**
**daß** jede Lamelle (9) eines Jalousiebereiches (12, 13) einen Betatigungshebel (16) aufweist und daß die Antriebsmittel eine Antriebsstange (17) aufweisen, an der alle Betätigungshebel (16) der Lamellen (9) angreifen und die durch ein Antriebsaggregat (18) antreibbar ist.

7. Jalousie nach einem der Ansprüche 1 bis 6,
**dadurch gekennzeichnet,**
**daß** die Längskanten (23) benachbarter Lamellen (9) komplementäre, formintegrierte Dichtkanten bilden, die beim Schließen der Jalousie (6, 7) miteinander dichtend zusammenwirken.

8. Jalousie nach einem der Ansprüche 1 bis 7,
**dadurch gekennzeichnet,**
**daß** die beiden Jalousiebereiche (12, 13) bezüglich der Längsebene (14) spiegelsymmetrisch ausgebildet sind.

9. Jalousie nach einem der Ansprüche 1 bis 8,
**dadurch gekennzeichnet,**
**daß** die Lamellen (9) bei in einem Fahrzeug montierter Jalousie (6, 7) im wesentlichen vertikal verlaufen.

10. Jalousieanordnung für ein Fahrzeug, insbesondere Personenkraftwagen, das in seiner Frontwand (1) oberhalb eines Stoßfängers (2) eine obere Kühllufteinlaßöffnung (3) und unterhalb des Stoßfängers (2) eine untere Kühllufteinlaßöffnung (4) aufweist,
**dadurch gekennzeichnet,**
**daß** die Jalousieanordnung (5) in einem Gehäuse (2) zwei Jalousien (6 und 7) nach einem der Ansprüche 1 bis 9 enthält, von denen die eine Jalousie (6) der oberen Kühllufteinlaßöffnung (3) und die andere Jalousie (7) der unteren Kühllufteinlaßöffnung (4) zugeordnet ist und die über ein gemeinsames Steuergerät unabhängig voneinander betätigbar sind.

## Claims

1. Grille for a radiator of an internal combustion engine, in particular of a passenger vehicle, with several adjacently arranged slats (9), the longitudinal axes (10) of which extend parallel with a grille plane (11), and with drive means (16, 17, 18) by means of which the slats (9) can be respectively pivoted about a pivot axis (24) extending parallel with the associated longitudinal axis (10), and the grille (6, 7) is split into two grille sections (12, 13), each of which incorporates several slats (9) and which are disposed on the two sides of a longitudinal plane (14) extending parallel with the longitudinal axes (10) of the slats (9) and perpendicular to the grille plane (11), and the drive means (16, 17, 18) are designed so that, in each grille section (12, 13), all slats (9) of the respective grille section (12, 13) can be displaced simultaneously in the same direction, the slats (9) of both grille sections (12, 13) can be displaced simultaneously and the slats (9) of the one grille section (12 or 13) can be displaced in the direction opposite the slats (9) of the other grille section (13 or 12),
**characterised in that**
- each slat (9) has an aerodynamic contour, which transmits a lifting force to this slat (9) as air circulates around it, generating an opening torque on this slat (9) and
- the contour is shell-shaped and the closed slats (9) have a concavely cambered internal face at the inflow side.

2. Grille as claimed in claim 1,
**characterised in that**
reinforcing webs (25) are provided in the concave internal face of the contoured slats (9).

3. Grille as claimed in claim 1 or 2,
**characterised in that**
the drive means have a drive unit (18), which drives the slats (9) of both grille sections (12, 13) to effect a pivoting motion.

4. Grille as claimed in one of claims 1 to 3,
**characterised in that**
the slats (9) of both grille sections (12, 13) are driven by the drive means (16, 17) so that when there is a slat displacement in order to open the grille (6, 7), a longitudinal edge (23) of each slat (9) on the outflow side of the grille (6,7) facing the longitudinal plane (14) is moved away from the longitudinal plane (14) and/or a longitudinal edge (23) on the outflow side of the grille (6, 7) facing away from the longitudinal plane (14) is moved closer to the longitudinal plane (14).

5. Grille as claimed in one of claims 1 to 4,
**characterised in that**
the drive means have a rod linkage (16, 17), by means of which all slats (9) of a grille section (12, 13) are forcibly coupled with one another and by means of which at least one slat (9) of this grille section (12, 13) is forcibly coupled with a drive unit (18) of the drive means.

6. Grille as claimed in one of claims 1 to 5,
**characterised in that**
each slat (9) of a grille section (12, 13) has an operating lever (16) and the drive means has a drive rod (17) on which all operating levers (16) of the slats (9) engage and which can be driven by a drive unit (18).

7. Grille as claimed in one of claims 1 to 6,
**characterised in that**
the longitudinal edges (23) of adjacent slats (9) form complementary, positively integrated seal edges which cooperate with one another to produce a seal when the grille (6, 7) is closed.

8. Grille as claimed in one of claims 1 to 7,
**characterised in that**
the two grille sections (12, 13) are disposed in symmetrical mirror image with respect to the longitudinal plane (14).

9. Grille as claimed in one of claims 1 to 8,
**characterised in that**
the slats (9) extend substantially vertically when the grille (6, 7) is mounted in a motor vehicle.

10. Grille for a motor vehicle, in particular a passenger vehicle, which has a top coolant air inlet orifice (3) in its front wall (1) above a bumper (2) and a bottom coolant air inlet orifice (4) underneath the bumper (2),
**characterised in that**
the grille unit (5) in a housing (2) contains two grilles (6 and 7) as claimed in one of claims 1 to 9, of which one grille (6) co-operates with the top coolant air inlet orifice (3) and the other grille (7) co-operates with the bottom coolant air inlet orifice (4), which can be operated independently of one another by means of a common control device.

## Revendications

1. Volet pour un radiateur d'un moteur à combustion interne d'un véhicule, en particulier d'une voiture de tourisme, comprenant plusieurs lamelles (9) disposées les unes à côté des autres, dont les axes longitudinaux (10) s'étendent parallèlement à un plan de volet (11), et des moyens d'entraînement (16, 17, 18) avec lesquels les lamelles (9) sont respectivement mobiles, de façon pivotante; autour d'un axe de pivotement (24) s'étendant parallèlement à l'axe longitudinal associé (10), où le volet (6, 7) est divisé en deux zones de volet (12, 13) qui présentent respectivement plusieurs lamelles (9) et qui sont configurées des deux côtés d'un plan longitudinal (14) qui s'étend de façon parallèle aux axes longitudinaux (10) des lamelles (9) et de façon perpendiculaire au plan de volet (11), et que les moyens d'entraînement (16, 17, 18) sont configurés de manière telle, que, concernant chaque zone de volet (12, 13), toutes les lamelles (9) de la zone de volet respective (12, 13) sont mobiles en même temps et dans le même sens, que les lamelles (9) des deux zones de volet (12, 13) sont mobiles en même temps et que les lamelles (9) de l'une des zones de volet (12 ou 13) est mobile en sens inverse par rapport aux lamelles (9) de l'autre zone de volet (13 ou 12),
**caractérisé**
- **en ce que** chaque lamelle (9) présente un profil aérodynamique qui, dans le cas d'un flux entourant la lamelle (9), introduit, dans cette lamelle (9), une force ascensionnelle qui produit, au niveau de cette lamelle (9), un moment d'ouverture, et
- **en ce que** les profils sont configurés en forme de coque et présentent, côté amont, lorsque les lamelles (9) sont fermées, un côté intérieur bombé de façon concave.

2. Volet selon la revendication 1, **caractérisé en ce que** des nervures de renfort (25) sont fixées dans le côté intérieur concave des lamelles profilées (9).

3. Volet selon la revendication 1 ou 2, **caractérisé en ce que** les moyens d'entraînement présentent un ensemble d'entraînement (18) qui entraîne les lamelles (9) des deux zones de volet (12, 13), pour déclencher le mouvement pivotant.

4. Volet selon l'une quelconque des revendications 1 à 3, **caractérisé en ce que** les lamelles (9) des deux zones de volet (12, 13) sont entraînées par les moyens d'entraînement (16, 17) de manière telle, que, lors d'un mouvement des lamelles ouvrant le volet (6, 7), une arête longitudinale (23) tournée vers le plan longitudinal (14), sur le côté aval du volet (6, 7), s'éloigne du plan longitudinal (14) et/ou une arête longitudinale (23) placée à l'opposé du plan longitudinal (14), sur le côté aval du volet (6, 7), se rapproche du plan longitudinal (14), ce mouvement d'éloignement et de rapprochement se produisant pour chaque lamelle (9).

5. Volet selon l'une quelconque des revendications 1 à 4, **caractérisé en ce que** les moyens d'entraînement présentent des tiges (16, 17) avec lesquelles toutes les lamelles (9) d'une zone de volet (12, 13) sont couplées, de force, les unes aux autres, tiges avec lesquelles au moins une lamelle (9) de cette zone de volet (12, 13) est couplée, de force, à un ensemble d'entraînement (18) des moyens d'entraînement.

6. Volet selon l'une quelconque des revendications 1 à 5, **caractérisé en ce** chaque lamelle (9) d'une zone de volet (12, 13) présente un levier d'actionnement (16) et en ce que les moyens d'entraînement présentent une tige d'entraînement (17) sur laquelle viennent s'appliquer tous les leviers d'actionnement (16) des lamelles (9) et qui est entraînée par un ensemble d'entraînement (18).

7. Volet selon l'une quelconque des revendications 1 à 6, **caractérisé en ce que** les arêtes longitudinales (23) de lamelles contiguës (9) forment des arêtes d'étanchéité complémentaires, de forme intégrée, qui, lors de la fermeture du volet (6, 7), agissent ensemble, de façon étanche les unes par rapport aux autres.

8. Volet selon l'une quelconque des revendications 1 à 7, **caractérisé en ce que** les deux zones de volet (12, 13) sont configurées de façon symétrique par rapport au plan longitudinal (14).

9. Volet selon l'une quelconque des revendications 1 à 8, **caractérisé en ce que** les lamelles (9), dans le cas d'un volet (6, 7) monté dans un véhicule, s'étendent pratiquement de façon verticale.

10. Agencement de volets pour un véhicule, en particulier pour une voiture de tourisme, qui présente, dans son panneau avant (1), au-dessus d'un pare-chocs (2), une ouverture supérieure (3) d'air de refroidissement et, au-dessous du pare-chocs (2), une ouverture inférieure (4) d'air de refroidissement,
**caractérisé**
**en ce que** l'agencement de volets (5) comprend, dans un carter (2), deux volets (6 et 7) selon l'une quelconque des revendications 1 à 9, dont l'un des volets (6) est associé à l'ouverture supérieure (3) d'air de refroidissement et l'autre volet (7) est associé à l'ouverture inférieure (4) d'air de refroidissement, et qui peuvent être actionnés indépendamment l'un de l'autre, par un organe de commande commun.
